# EUROPEAN PATENT SPECIFICATION

(11) **EP 1 108 179 B1**
(45) Date of publication and mention of the grant of the patent: **09.02.2005**
(21) Application number: 00943505.8
(22) Date of filing: 30.06.2000
(51) Int. Cl.: F16L 59/20, F16L 47/00

(54) **CASING WITH PROVISION FOR CLOSING AN OPENING THEREIN**
GEHÄUSE MIT MASSNAHMEN ZUM VERSCHLIESSEN EINER DARIN ENTHALTENEN ÖFFNUNG
GAINE AVEC MOYEN DE FERMETURE D'UNE OUVERTURE

(30) Priority: 30.06.1999 CA 2276708
(43) Date of publication of application: 20.06.2001
(73) Proprietor: ShawCor Ltd., Rexdale, Ontario M9W 1M7 (CA)
(72) Inventor: TAILOR, Dilip, K., Brampton, Ontario L6Y 2T2 (CA); STATE, Jeffrey, A. D., Etobicoke, Ontario M8Y 3N6 (CA); TATHGUR, Amarjit, Brampton, Ontario L6R 1T9 (CA)
(74) Representative: VOSSIUS & PARTNER
(86) International application number: PCT/CA2000/000787
(87) International publication number: WO 2001/002768

(56) References cited:
- WO-A-00/52381
- WO-A-98/21517
- US-A- 4 379 009
- US-A- 4 645 557
- US-A- 4 728 550

## Description

The present invention relates to at least partially heat shrinkable members for forming a connection between tubular sections. Such members may, for example, be used in the formation of casings for preinsulated pipe joints. Usually, an opening is made in such casing through which a liquid precursor of a foam composition may be poured. After the foam composition is allowed to foam and cure, the opening is closed with a plug.

Known casings formed of which the applicant is aware have presented problems of forming a closure between the casing and the plug.

Published PCT application WO 98/21517 dated May 22, 1998 in the name of the present applicant discloses various forms of casing that provide a relatively uncrosslinked layer to which a plug may be fused. In one form, there is disclosed an inner relatively uncrosslinked tube fused to an outer cross linked tube. The provision of such inner tube is not always convenient, however.

In the present invention as defined by claim 1 there is provided a casing member for forming a connection between tubular sections, at least end portions of the member being heat-shrinkable, and the casing member having bonded to a surface of a continuous imperforate portion thereof a patch member through which an opening may be formed and a plug applied to close the opening.

Such patches provide an uncrosslinked or relatively uncrosslinked layer (as compared to the material of the casing) to which a foam hole plug may be fused. In use, an aperture may be formed through the casing wall and through the patch, and the plug fused to such hole after the foam filling. In such case, the plug may be relatively conveniently fusion bonded to the edge of the opening in the patch member.

For determination of a degree of crosslinking the preferred method is by gel fraction in the conventional manner.

In a further form, the patch may provide a side, for example an outer side which is planar or has a larger radius of curvature than the casing, to facilitate attachment of plugs, for example mechanically attached plugs, to an opening formed through the patch and through the casing wall.

Further, the patch may provide an increased wall thickness to facilitate fusion of a plug or mechanical attachment or locking of a mechanically attached plug to an opening formed through the patch and through the casing wall.

Some examples of casings in accordance with the present invention will now be described in more detail, by way of example only, with reference to the accompanying drawing.

Figs. 1, 2, 3, 4 and 5 show axial cross-sections through five different embodiments of tubular casing members provided with patch members in accordance with the invention.

Figs. 1A, 2A, 3A, 4A and 5A show somewhat schematically isometric views of the casings of Figs. 1 to 5, respectively.

Fig. 6 shows a partially schematic transverse cross-section through a known form of casing and a mechanical plug closure.

Fig. 7 shows a partially schematic transverse cross-section through a casing member in accordance with the invention having plug closure.

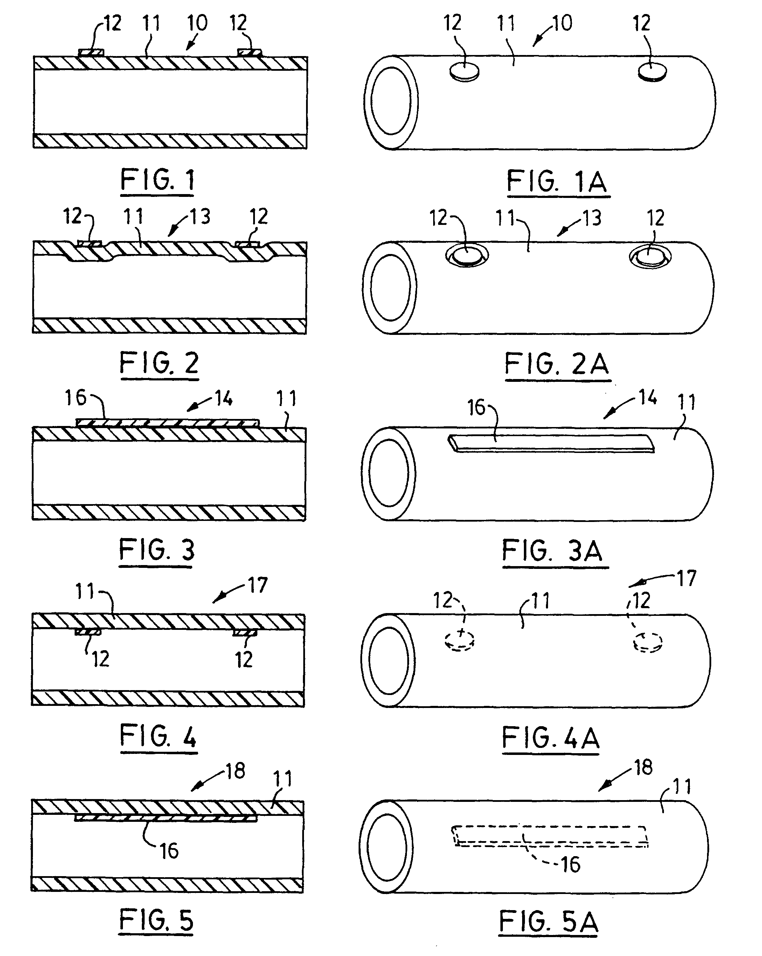

Referring to the drawings, wherein like reference numerals indicate like parts, Figs. 1 and 1a show a casing 10 comprising a one piece circumferentially shrinkable crosslinked plastics material tubular sleeve 11 having at least one and usually two patches 12 bonded to it. The patches 12 are of plastics sheet material that is uncrosslinked or is less crosslinked than the material of the sleeve 11. For example, the sleeve and patches may comprise a polyolefin, or a blend of a polyolefins. Usually the patches 12 are aligned axially and are spaced inwardly from the ends of the sleeve 11. Preferably, the patches have a generally rounded circumference and do not have corners that may tend to be lifted up if the sleeve is subjected to soil stress. More preferably the patches are circular since this may facilitate application to the sleeve and is more economical in usage of materials since the hole and plug are usually round.

The procedures for forming the sleeve 11 are in themselves well known to those skilled in the art. Reference may be made, for example, to the description in the above mentioned PCT publication WO 98/21517.

The procedures for bonding the patches 12 to the sleeve 11 may, for example, be generally similar to those used for providing a relatively uncrosslinked tubular inner member described in WO 98/21517, except discrete patch members are employed and the patch members 12 are bonded on the outside of the sleeve. The patches may be applied to the sleeve before or after expansion. For example, the patch members 12, if relatively uncrosslinked, may be fusion bonded or welded to the sleeve 11, or if crosslinked may be bonded to the sleeve 11 by a conventional adhesive agent, or the patch members 12 may be initially bonded with a conventional adhesive agent and then are subsequently fused or welded to the sleeve 11. As will be apparent to those of ordinary skill in the art many different welding techniques may be used including application of elevated temperature and pressure, friction welding, spinning, induction welding, etc.

In one example of a procedure for making the casing, a heat shrinkable sleeve 11 may be heated to heat shrink it down onto a collapsible mandrel that is sufficiently large that the sleeve 11 will remain heat shrinkable after removal from the mandrel. The patches 12 are applied and the assembly is placed in an oven to fuse the patches 12 to the sleeve 11. The assembly is cooled, the mandrel collapsed, and the completed casing 10 removed from the mandrel.

Fig. 2 shows a further embodiment of a casing 13 wherein patches 12 are disposed on a portion of the sleeve 11 that is offset inwardly from the adjacent general surface of the sleeve 11 so that the surface of each patch 12 is generally flush with the adjacent general surfaces of the sleeve 11. This arrangement has the advantage that it reduces soil stress.

The casing 13 may, for example, be formed by applying the patches 12 on a crosslinked sleeve 11, and placing the assembly within a cylindrical mold comprising two or more sections, and heating the assembly while closing the ends of the sleeve 11 and passing steam or air into the interior of the sleeve 11 through ports in the sealing means, so that the sleeve 11 together with the patches 12 expands outwardly to conform to the inner side of the mold. The assembly is rapidly cooled and the mold sections are opened to allow removal of the finished casing 13 from the mold.

Fig. 3 shows a further form of casing 14 wherein, instead of two discrete patches 12 an elongated strip form patch 16 extending longitudinally axially of the sleeve 11. This provides an advantage of allowing some flexibility in the positioning of the hole or holes to be formed through the patch 16 in the event that the length of the exposed or bare end portions of the insulated pipe is somewhat variable.

The casing 14 as shown in Fig. 3 may, for example, be formed generally in the manner described above for the casing 10 with reference to Figs. 1 and 1a except a strip form patch is bonded to the exterior of the sleeve 11 before heating and expansion.

Figs. 4 and 4A show a further form of casing 17 wherein the patches 12 are bonded to the inner side of the sleeve 11. Such casing may be formed by, for example, clamping the patches 12 to the inner side of a crosslinked unexpanded sleeve 11, heating the assembly to bond the patches to the sleeve 11 and subsequently heating and expanding the sleeve 11 in the conventional manner.

Figs. 5 and 5a show a still further form 18 wherein a strip form patch 16 is bonded to the inner side of the sleeve 11. This casing may, for example, be formed in a manner generally similar to that described with the casing 17 with reference to Figs. 4 and 4a above, except a strip form patch 16 is bonded to the inner side of the sleeve 11 before expansion.

The casing 17 and 18 of Figs. 4 and 5 have the advantage that they are subject to substantially less soil stress than the embodiments that have the patch or patches bonded on the outer side of the sleeve.

While the casings described in detail above with reference to the drawings generally comprise sleeves 11 that are heat shrinkable along the whole of their length, it is of course possible to provide casings in accordance with the invention comprising a patch member or members bonded to a sleeve that is heat shrinkable only at its end portions. Such sleeves and procedures for making them are well known to those skilled in the art and are described, for example, in U.K. patent application No. 2, 184, 804 dated July 1, 1987, in the name Tjaerekopagniet Danske, to which reference may be made for details.

In use, the casings 10 through 18 described above with reference to the drawings may be applied to forming an insulated joint between insulated pipe sections generally in the manner described in detail in our above mentioned international patent application publication WO 98/21517.

In such case, usually each pipe section is bare of .insulation at end portion of the pipe, and the bore ends are welded together at a weld joint. The heat shrinkable sleeve 11 is applied over the weld joint and is positioned so that each end of the sleeve 11, outwardly from the patches 12 or from the strip form patch 16, overlaps a portion of the pipe insulation outwardly from the end of the adjacent pipe.

A sealant, adhesive or other functional material may be provided at an area between the inner side of each end of the sleeve 11 and the insulating material that is on the outside of the pipe in order to provide a water tight seal when the ends of the casing 10 to 18 are heated to shrink them down tightly onto the exterior of the pipe insulation.

An opening is drilled through one or both patches 12 (or at a region or at spaced regions along the elongate strip in the case of a strip form patch 16). The drilled holes extend through the adjacent wall of the sleeve 11 to provide a passageway communicating from the outside to the interior of the casing such as casing 10. Preferably, two holes are drilled so that the liquid precursor may be poured through one of them while the other hole functions as a vent.

Following the pouring of the liquid precursor, and after allowing the foam to form and cure, the drilled holes are closed with a plastic plug. In the case in which the patch 12 or 16 is weldable, that is, is uncrosslinked or is less crosslinked than the material of the sleeve 11, the plug may be heated to cause it to fuse or weld to the exposed margin of the patch 12 or 16 at the edges of the opening that is formed through the patch. Alternatively, a mechanically attached plug may be used to close the opening, as described in more detail below.

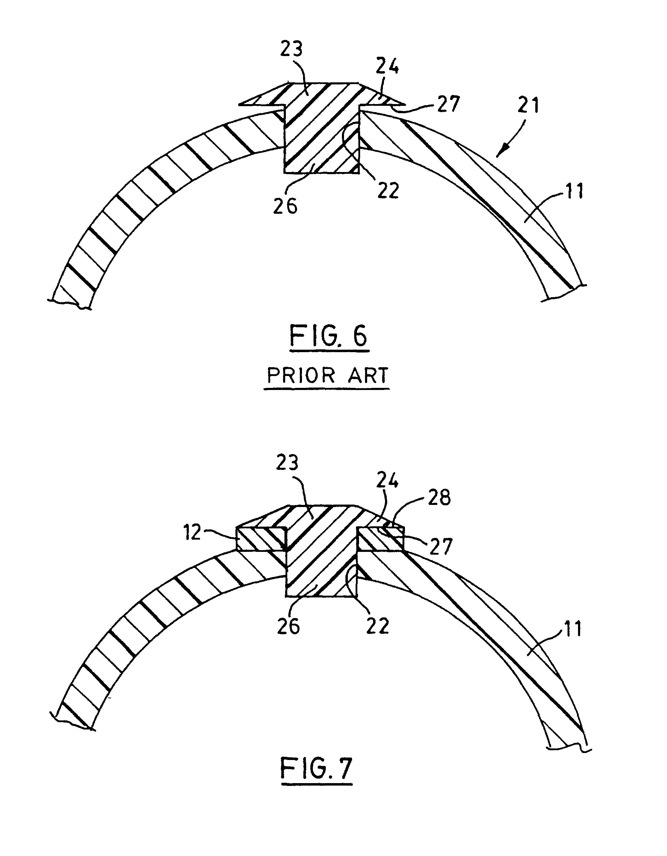

Fig. 6 shows a known form of casing 21 comprising a sleeve 11 having a foam hole 22 through it closed by a plug 23 having an enlarged head 24 and a body 26 that engages mechanically within or locks within the hole 22 in known manner. This closure relies on intimate contact between the head 24 of the plug 23 and the surface of the sleeve 11. While this can usually be achieved with large diameter casings 21, for example greater than 160 mm in diameter, with smaller diameter casings for example less than 125 mm, for example 63 mm diameter, the radius of curvature of the sleeve 11 is too small to allow intimate contact so that there is a gap between the underside 27 of the head 24 and the sleeve 21, as seen in Fig. 6.

In the present invention, there may be provided a patch 12 as seen in Fig. 7, the outer side 28 of which may be planar or at least provides a larger radius of curvature than the sleeve 11, as seen in Fig. 7, so that there is good contact between the patch 12 and the underside 27 of the head 24 of the plug 23.

Such flattened patch 12 may be provided, for example by placing a rigid metal disc of the same size and shape as the patch 12, over the patch 12 and then expanding the sleeve 11 and the patch 12 within an external mandrel. Alternatively, after expansion, the sleeve 11 with the patch 12 over it may be placed in a small press with a heater that heats and fuses the patch 12 to the sleeve 11 and fuses the upper side of the patch 12 flat. The stiffness and thickness of the patch 12, when fused to the sleeve 11, help flatten out the curvature of the section comprising the patch 12. It will be appreciated the flattened patch may be a strip form patch 16.

A further advantage of the patch 12 or 16 is that it augments the wall thickness of the sleeve 11 at the point where the closure plug such as plug 23 is to be applied.

The wall thickness of casings used with small diameter pipeline may be 1.0 to 3.0 mm, often 1.5 to 2.5 mm, and such wall thickness may provide insufficient surface area to obtain adequate welding of the plug to the side wall of the opening formed through the sleeve. The inadequate welding increases the risk of the plug becoming dislodged or damaged when the pipeline is subjected to dynamic soil stress. The provision of the patch 12 or 16 on thin-walled casings alleviates the problem of inadequate weld area.

Further, where a mechanically attached plug, such as plug 23, is used, a sleeve wall thickness of 1.0 to 3.0 mm may be insufficient to achieve secure locking of the plug 23 to the sleeve. However with the provision of a discrete or puck-like patch 12 or strip form patch 16, sufficient wall thickness can be obtained to achieve a secure locking of the plug 23 to the sleeve 11.

Presently, it is contemplated that usually the said opening or openings will be formed through the patch member and sleeve wall in the field, in the course of installation of the casing. In a modification, however, the opening or openings may be formed through the patch in the factory.

Preferably, each patch member 12 or strip 16 is about 15 to about 120 mm wide, more preferably about 30 to about 60 mm wide and may be about 5 mm wider on each side than the plug. Typically, the plugs are about 20 mm to 50 mm in diameter, most commonly about 35 mm in diameter.

Whereas it is known to use patches that are applied over an edge of a wrap around sleeve at an overlap with a view to connecting the overlap edge to the underlying portion of the sleeve, and to use patches over tears or holes in sleeves, in the present invention the patch or patches are not applied over an edge or over a hole in the sleeve, but are applied over a region spaced inwardly from an edge so that the sleeve extends beyond the patch on all sides and hence are applied over a continuous imperforate or intact portion of the sleeve surface. Further, whereas such known patches are maintained imperforate, in the present invention when the casing is modified to provide an opening through it, the opening is formed through the patch member, as well as through the adjacent portion of the casing, these openings being in registry with one another.

While the above detailed description with reference to the drawings has referred to tubular extruded heat shrinkable sleeves, it will be appreciated that the patch or patches 12 or 16 may be employed on a heat shrinkable wrap around sleeve. For example, they may be bonded to a continuous imperforate or intact portion of the surface of a conventional wrap around sleeve comprising a sheet that is at least partially heat shrinkable along a heat shrink direction and that is, or of which sections are, adapted to be formed into a tubular sleeve by connecting an edge of the sheet to a portion spaced therefrom in the heat shrink direction. Such sleeves are in themselves well known and are described, for example, in U.S. patents 4,472,468 (Tailor et al), 5,175,032 (Steele et al) and 5,411,777 (Steele et al) and need not be described in detail herein.

Some examples providing further details are given below.

### EXAMPLE 1

A high density polyethylene tube was extruded with a wall thickness of 2.0 mm and an inside diameter of 119 mm. It was crosslinked by electron beam radiation to obtain a gel fraction (degree of crosslink) of 50%. Patches were die cut from a high density polyethylene 2.0 mm thick sheet into a round shape of 45 mm diameter.

The high density polyethylene used for the tube and for the patches was NOVACOR (trade-mark) HEY449A from Nova Chemicals.

The extruded tube was cut to a 750 mm length, and the patches were placed centrally 330 mm apart, and secured down with 50 mm wide high temperature tape.

The tube was placed in the oven at 140°C for 30 minutes, and then placed in an expander. Air was blown inside the tube which expanded against an external metal mandrel, which is cooled. After 3 minutes of cooling, the part was removed. The resulting expanded casing had two patches secured and bonded to them as shown in Figs. 2 and 2A.

The 35 mm wide holes were drilled in the patches and through the underlying portion of the tube wall to form through holes and HDPE plugs from ABB I.C. Moller were welded into the holes successfully.

### EXAMPLE 2

The procedure of Example 1 was repeated, except the sheet from which the patch was cut, was laminated with an adhesive as follows:
1.5 mm thickness, HDPE as in Example 1
0.5 mm thickness: Laminated adhesive type FUSABOND (trade-mark) 482 from DuPont
45 mm. diameter patches were die cut from this sheet and applied to the casing followed by welding of the plugs as described in Example 1.

### EXAMPLE 3

The same tube and patch material described in Example 1 were used. The patch was cut into a 45 mm x 350 mm strip. The strip was centrally positioned inside the tube and clamped between two metal bars. This assembly was placed in the oven at 160°C for 30 minutes to allow the fusion of the patch to the casing tube to take place.

The tube was removed from the oven and expanded. The finished tube had a strip patch inside as shown in Figs. 5 and 5A.

### EXAMPLE 4

The procedure of Example 1 was followed, with the following changes. After the round 45 mm diameter patches were placed on the casing, a steel disc, 2 mm thick x 45 mm diameter was placed over each patch, and secured with a high temperature tape. The assembly was then expanded as described in Example 1. Where the steel disks made contact with the curvature of the external mandrel, the patches remained flat, thus imparting flatness to the patch, while the rest of the casing conformed to the curvature of the mandrel. After cooling, the part was removed, the discs were taken off, and a casing with two flat patches was obtained.

## Claims

1. A casing member for forming a connection between tubular sections, at least end portions of the casing member (11) being heat-shrinkable, and a patch member (12, 16) bonded to a surface of the casing member (11) and extending over only a portion of the circumference thereof, the casing member (11) comprising plastics material that is at least partially crosslinked and the patch member (12, 16) comprising plastics material that is relatively uncrosslinked as compared with the plastics material of the casing member.

2. A casing member as claimed in claim 1 having the patch member (12, 16) bonded to a surface of a continuous imperforate portion thereof.

3. A casing member as claimed in claim 1 having an opening formed through the patch member (12, 16) and through the adjacent portion of the casing member (11).

4. A member according to claim 1, 2 or 3 in the form of a tubular sleeve.

5. A member according to claim 1, 2 or 3 in the form of a wrap-around sleeve comprising a sheet that is at least partially heat shrinkable along a heat shrink direction and that is, or of which sections are, adapted to be formed into a tubular sleeve by connecting an edge to a portion spaced therefrom in the heat shrink direction.

6. A member according to any of claims 1 to 5, wherein the patch member (12) has a generally rounded circumference when viewed in a direction extending radially of the casing member.

7. A member according to claim 6, wherein the patch member (12) is generally circular.

8. A member according to any of claims 4 to 7 having two of said patch members (12) spaced apart in the longitudinally axial direction of the tubular sleeve and wherein each patch member (12) is spaced inwardly from an end of the sleeve.

9. A member according to claim 4 or 5, wherein the patch member (16) comprises a strip that is elongated in the longitudinally axial direction of the tubular sleeve.

10. A member according to any of claims 4 to 9, wherein the or each patch member (12, 16) is disposed on a radially outer surface of the sleeve.

11. A member according to claim 10, wherein the patch member (12, 16) has an outer side that is planar or has a radius of curvature greater than that of the sleeve.

12. A member according to any of claims 4 to 9, wherein the or each patch member (12, 16) is disposed on a radially inner surface of the sleeve.

13. A member according to any of claims 1 to 12, wherein the or each patch member (12, 16) is disposed on a portion of the casing member (11) inwardly offset from the adjacent general surface of the casing member.

14. A member according to any of claims 1 to 13, wherein the or each patch member (12, 16) is about 15 to about 120 mm wide.

15. A member according to claim 1 to 13, wherein the or each patch member (12, 16) is about 30 to about 60 mm wide.

16. A method of sealing and insulating a weld joint between two lengths of insulated pipe, each pipe being bare of insulation at an end portion of the pipe adjacent the weld, comprising :
applying to the weld joint a casing membe (11) in the form of a tubular sleeve, at least end portions of the casing member (11) being heat-shrinkable; positioning the casing member (11) with each end portion thereof overlapping a portion of the insulation outwardly from the end of the respectively adjacent pipe; and the casing member (11) having a patch member (12, 16) bonded to a surface of a continuous imperforate portion thereof and extending over only a portion of the circumference of the casing member (11), the casing member (11) and patch member (12, 16) being of plastics material, the casing member (11) being at least partially crosslinked, and the patch member (12, 16) being uncrosslinked or relatively uncrosslinked as compared with the casing member; heat shrinking the end portions of the casing member (11) on and bonding them to the adjacent insulation portions; forming through the patch member (12, 16) an opening providing a passage from the exterior to the inside of the casing member (11); pouring through the opening a liquid precursor of a foam composition; allowing the precursor to foam and cure; and closing the opening with a plug (23).

17. A method as claimed in claim 16 and including the step of fusion bonding the plug (23) to an edge of the opening in the patch member (12, 16).

## Patentansprüche

1. Gehäuseelement zum Bilden einer Verbindung zwischen röhrenförmigen Abschnitten, wobei wenigstens Endabschnitte des Gehäuseelements (11) durch Wärme schrumpffähig sind und ein Füllstückelement (12, 16) mit einer Oberfläche des Gehäuseelements (11) verbunden ist, und sich über nur einen Teil von dessen Umfang erstreckt, wobei das Gehäuseelement (11) Kunststoffmaterial aufweist, das wenigstens teilweise vernetzt ist, und das Füllstückelement (12, 16) Kunststoffmaterial aufweist, das im Vergleich zum Kunststoffmaterial des Gehäuseelements relativ unvernetzt ist.

2. Gehäuseelement nach Anspruch 1, wobei das Füllstückelement (12, 16) mit einer Oberfläche eines durchgehenden, unperforierten Teils davon verbunden ist.

3. Gehäuseelement nach Anspruch 1, wobei eine Öffnung durch das Füllstückelement (12, 16) und durch den angrenzenden Teil des Gehäuseelements (11) ausgebildet ist.

4. Element nach Anspruch 1, 2 oder 3 in der Form einer röhrenförmigen Muffe.

5. Element nach Anspruch 1, 2 oder 3 in der Form einer Wickelmuffe, die eine Bahn aufweist, die wenigstens teilweise entlang einer Wärmeschrumpfrichtung durch Wärme schrumpffähig ist und die oder von der Abschnitte angepasst sind, um durch Verbinden einer Kante mit einem davon beabstandeten Teil in Wärmeschrumpfrichtung in eine röhrenförmige Muffe geformt zu werden.

6. Element nach einem der Ansprüche 1 bis 5, wobei das Füllstückelement (12) einen im Allgemeinen gerundeten Umfang hat, in einer Richtung gesehen, die sich radial vom Gehäuseelement erstreckt.

7. , Element nach Anspruch 6, wobei das Füllstückelement (12) im Allgemeinen kreisförmig ist.

8. Element nach einem der Ansprüche 4 bis 7 mit zwei von den Füllstückelementen (12), die in axialer Längsrichtung der röhrenförmigen Muffe voneinander beabstandet sind und wobei jedes Füllstückelement (12) nach innen von einem Ende der Muffe beabstandet ist.

9. Element nach Anspruch 4 oder 5, wobei das Füllstückelement (16) einen Streifen aufweist, der in der axialen Längsrichtung der röhrenförmigen Muffe gestreckt ist.

10. Element nach einem der Ansprüche 4 bis 9, wobei das oder jedes Füllstückelement (12, 16) an einer radial äußeren Oberfläche der Muffe angeordnet ist.

11. Element nach Anspruch 10, wobei das Füllstückelement (12, 16) eine Außenseite hat, die eben ist oder einen Krümmungsradius hat, der größer ist als der der Muffe.

12. Element nach einem der Ansprüche 4 bis 9, wobei das oder jedes Füllstückelement (12, 16) an einer radial inneren Oberfläche der Muffe angeordnet ist.

13. Element nach einem der Ansprüche 1 bis 12, wobei das oder jedes Füllstückelement (12, 16) an einem Teil des Gehäuseelements (11) angeordnet ist, das nach innen von der angrenzenden, allgemeinen Oberfläche des Gehäuseelements versetzt ist.

14. Element nach einem der Ansprüche 1 bis 13, wobei das oder jedes Füllstückelement (12, 16) etwa 15 bis etwa 120 mm breit ist.

15. Element nach einem der Ansprüche 1 bis 13, wobei das oder jedes Füllstückelement (12, 16) etwa 30 bis etwa 60 mm breit ist.

16. Verfahren zum Abdichten und Isolieren einer Schweißverbindung zwischen zwei Längen eines isolierten Rohrs, wobei jedes Rohr an einem Endteil des Rohrs angrenzend an die Schweißung abisoliert ist, mit:
Anbringen eines Gehäuseelements (11) in der Form einer röhrenförmigen Muffe an die Schweißverbindung,
wobei wenigstens Endabschnitte des Gehäuseelements (11) durch Wärme schrumpffähig sind; Positionieren des Gehäuseelements (11), wobei jeder Endabschnitt davon einen Teil der Isolierung außerhalb des Endes des jeweils angrenzenden Rohrs überlappt; und dem Gehäuseelement (11) mit einem Füllstückelement (12, 16), das mit einer Oberfläche eines durchgehend unperforierten Teils davon verbunden ist und sich über nur einen Teil des Umfangs des Gehäuseelements (11) erstreckt, wobei das Gehäuseelement (11) und das Füllstückelement (12, 16) aus Kunststoffmaterial sind, wobei das Gehäuseelement (11) wenigstens teilweise vernetzt und das Füllstückelement (12, 16) unvernetzt oder verglichen mit dem Gehäuseelement relativ unvernetzt ist; Wärmeschrumpfen der Endabschnitte des Gehäuseelements (11) auf und deren Verbinden mit den angrenzenden Isolationsteilen; Bilden einer Öffnung durch das Füllstückelement (12, 16), die einen Durchgang von Außen ins Innere des Gehäuseelements (11) bereitstellt; Eingießen eines flüssigen Vorprodukts einer Schaumzusammensetzung durch die Öffnung; Ermöglichen des Vorprodukts, aufzuschäumen und auszuhärten; und Verschließen der Öffnung mit einem Stopfen (23).

17. Verfahren nach Anspruch 16 aufweisend den Schritt des Schmelzverbinden des Stopfens (23) mit einer Kante der Öffnung im Füllstückelement (12, 16).

## Revendications

1. Elément de gaine destiné à former une connexion entre des sections de tube, au moins des parties d'extrémité de l'élément de gaine (11) étant thermorétractables, et un élément de pastille (12, 16) lié à une surface de l'élément de gaine (11) et s'étendant uniquement sur une partie de la circonférence de celle-ci, l'élément de gaine (11) se composant d'une matière plastique qui est réticulée au moins en partie et l'élément de pastille (12, 16) se composant d'une matière plastique qui est relativement non réticulée en comparaison avec la matière plastique de l'élément de gaine.

2. Elément de gaine selon la revendication 1 comprenant l'élément de pastille (12, 16) lié à une surface d'une partie continue sans perforation de celui-ci.

3. Elément de gaine selon la revendication 1 comprenant une ouverture formée au travers de l'élément de pastille (12, 16) et au travers de la partie adjacente de l'élément de gaine (11).

4. Elément de gaine selon les revendications 1, 2 ou 3 ayant la forme d'un manchon tubulaire.

5. Elément de gaine selon les revendications 1, 2 ou 3 ayant la forme d'un manchon enveloppant comprenant une feuille qui est thermorétractable au moins en partie le long d'une direction de thermorétraction et qui est, ou dont des sections sont, adapté(es) pour être formé(es) sous forme de manchon tubulaire au moyen d'une connexion d'un bord sur une partie séparée de celui-ci dans la direction de le thermorétraction.

6. Elément de gaine selon l'une quelconque des revendications 1 à 5, dans l'élément de pastille (12) a une circonférence générale arrondie, lorsqu'elle est vue dans une direction s'étendant de manière radiale par rapport à l'élément de gaine.

7. Elément de gaine selon la revendication 6, dans lequel l'élément de pastille (12) a une forme générale circulaire.

8. Elément de gaine selon l'une quelconque des revendications 4 à 7 comprenant deux desdits éléments de pastille (12) séparés dans la direction axiale longitudinale du manchon tubulaire, et dans lequel chaque élément de pastille (12) est espacé vers l'intérieur d'une extrémité du manchon.

9. Elément de gaine selon la revendication 4 ou la revendication 5, dans lequel l'élément de pastille (16) comprend une bande qui s'allonge dans la direction axiale longitudinale du manchon tubulaire.

10. Elément de gaine selon l'une quelconque des revendications 4 à 9, dans lequel l'élément de pastille ou chaque élément de pastille (12, 16) est disposé sur une surface radiale externe du manchon.

11. Elément de gaine selon la revendication 10, dans lequel l'élément de pastille (12, 16) comprend un côté extérieur qui est plan ou à un rayon de courbure supérieur à celui du manchon.

12. Elément de gaine selon l'une quelconque des revendications 4 à 9, dans lequel l'élément de pastille ou chaque élément de pastille (12, 16) est disposé sur une surface radiale intérieure du manchon.

13. Elément de gaine selon l'une quelconque des revendications 1 à 12, dans lequel l'élément de pastille ou chaque élément de pastille (12, 16) est disposé sur une partie de l'élément de gaine (11) en décalage vers l'intérieur à partir de la surface générale adjacente de l'élément de gaine.

14. Elément de gaine selon l'une quelconque des revendications 1 à 13, dans lequel l'élément de pastille ou chaque élément de pastille (12, 16) a une largeur d'environ 15 mm à environ 120 mm.

15. Elément de gaine selon l'une quelconque des revendications 1 à 13, dans lequel l'élément de pastille ou chaque élément de pastille (12, 16) a une largeur d'environ 30 mm à environ 60 mm.

16. Procédé de mise en étanchéité et d'isolation d'une connexion par soudage entre deux longueurs d'un tuyau isolé, chaque tuyau ne comportant pas d'isolation à une partie d'extrémité du tuyau proche de la soudure, comprenant :
l'application à la connexion par soudage d'un élément de gaine (11) sous la forme d'un manchon tubulaire, au moins des parties d'extrémité de l'élément de gaine (11) étant thermorétractables ; le positionnement de l'élément de gaine (11), chaque partie d'extrémité de celui-ci recouvrant vers l'extérieur une partie de l'isolation à partir de l'extrémité du tuyau respectivement adjacent ; et l'élément de gaine (11) comprenant un élément de pastille (12, 16) lié à une surface d'une partie continue sans perforation de celui-ci et s'étendant uniquement sur une partie de la circonférence de l'élément de gaine (11), l'élément de gaine (11) et l'élément de pastille (12, 16) étant formés à partir d'une matière plastique, l'élément de gaine (11) étant réticulé au moins en partie, et l'élément de pastille (12, 16) étant non réticulé ou relativement non réticulé en comparaison avec l'élément de gaine ; la thermorétractation des parties d'extrémité de l'élément de gaine (11) sur les parties d'isolation adjacentes et leur liaison sur celles-ci ; la formation au travers de l'élément de pastille (12, 16) d'une ouverture procurant un passage depuis l'extérieur vers l'intérieur de l'élément de gaine (11) ; le déversement au travers de l'ouverture d'un liquide précurseur d'une composition de mousse ; la possibilité de transformation du précurseur en mousse et de son durcissement ; et la fermeture de l'ouverture au moyen d'un bouchon (23).

17. Procédé selon la revendication 16 comprenant en outre l'étape de liaison par fusion du bouchon (23) sur un bord de l'ouverture dans l'élément de pastille (12, 16).
